# FASCICULE DE BREVET EUROPEEN

(11) **EP 3 161 474 B1**
(45) Date de publication et mention de la délivrance du brevet: **10.05.2023**
(21) Numéro de dépôt: 15732243.9
(22) Date de dépôt: 26.06.2015
(51) Int. Cl.: G01N 30/56, G01N 30/60, B01L 3/00, G01N 30/88

(54) **DISPOSITIF DE CHROMATOGRAPHIE EN PHASE GAZEUSE ET PROCEDE DE FONCTIONNALISATION D'UN TEL DISPOSITIF**
GASCHROMATOGRAPHIEVORRICHTUNG UND VERFAHREN ZUR FUNKTIONALISIERUNG SOLCH EINER VORRICHTUNG
GAS CHROMATOGRAPHY DEVICE AND METHOD OF FUNCTIONALIZING SUCH A DEVICE

(30) Priorité: 30.06.2014 FR 1456183
(43) Date de publication de la demande: 03.05.2017
(73) Titulaire: Commissariat à l'Énergie Atomique et aux Énergies Alternatives, 75015 Paris (FR)
(72) Inventeur: RICOUL, Florence, F-38950 Quaix-en-Chartreuse (FR); BELLEMIN COMTE, Amélie, 38340 Voreppe (FR); BOURLON, Bertrand, F-38360 Sassenage (FR); CHARLES, Raymond, F-38430 Saint Jean de Moirans (FR); PROGENT, Frédéric, F-75005 Paris (FR)
(74) Mandataire: Brevalex
(86) Numéro de dépôt international: PCT/EP2015/064596
(87) Numéro de publication internationale: WO 2016/001102

(56) Documents cités:
- EP-A1- 1 364 150
- WO-A1-2012/136943
- WO-A2-2008/067296
- US-A1- 2003 206 832
- US-A1- 2005 042 149
- US-A1- 2010 322 826
- US-A1- 2013 206 667
- US-B1- 6 635 226

## Description

### DOMAINE TECHNIQUE

La présente invention concerne un dispositif de chromatographie en phase gazeuse, et plus particulièrement un dispositif de chromatographie en phase gazeuse comportant une micro-colonne de chromatographie. La présente invention concerne également un procédé de fonctionnalisation par voie liquide d'un tel dispositif.

### ÉTAT DE LA TECHNIQUE ANTÉRIEURE

Un dispositif de chromatographie en phase gazeuse comporte une colonne de chromatographie dont la paroi interne est recouverte d'une phase dite stationnaire ou couche de fonctionnalisation présentant une affinité plus ou moins élevée avec les composés de l'échantillon à analyser. Une phase dite mobile ou fluide circulant, par exemple un gaz porteur, circule dans la colonne de chromatographie.

L'échantillon à analyser est injecté dans la colonne de chromatographie et transporté par le fluide circulant. Au fur et à mesure de la progression de l'échantillon dans la colonne, les composés sont plus ou moins ralentis en fonction de leur affinité avec la phase stationnaire, ce qui permet de les séparer. Un détecteur, connecté à la sortie de la colonne, permet d'identifier les composés en fonction de leur temps de rétention, et éventuellement de les quantifier. Plus un composé présente une affinité élevée avec la phase stationnaire, plus il prendra de temps pour sortir de la colonne de chromatographie et présentera donc un temps de rétention élevé.

Un pré-concentrateur ou un injecteur peut être disposé à l'entrée de la colonne de chromatographie.

On souhaite utiliser des capillaires pour connecter une colonne de chromatographie à différents systèmes, par exemple à un injecteur en entrée et à un détecteur en sortie de la colonne de chromatographie.

Lors de la fonctionnalisation d'un dispositif de chromatographie dont la colonne de chromatographie est raccordée à des capillaires en entrée et en sortie, les parois internes des capillaires sont également recouvertes par la phase stationnaire destinée à recouvrir les parois internes de la colonne de chromatographie. Il existe alors un risque d'adsorption et de rétention des composés de l'échantillon à analyser sur les parois des capillaires, en amont et en aval de la colonne de chromatographie. Ce phénomène de rétention de composés en amont et en aval de la colonne de chromatographie peut rendre difficile l'analyse des composés. Il convient alors de chauffer les capillaires de connexion pour limiter ce phénomène.

Par ailleurs, les colles couramment utilisées pour raccorder les capillaires à la colonne de chromatographie supportent difficilement des sollicitations à des températures supérieures à environ 200 °C.

La demande de brevet US 2008/0121016 A1 décrit un système de chromatographie en phase gazeuse comportant un injecteur, une colonne de chromatographie et un détecteur, l'injecteur et le détecteur étant connectés à la colonne de chromatographie par l'intermédiaire d'une plateforme micro-fluidique. Cette demande de brevet indique que l'utilisation de capillaires raccordés, par collage, à un dispositif de chromatographie s'accompagne de certains inconvénients, parmi lesquels la mauvaise tenue à haute température et le fait que le raccordement avec les capillaires est non réversible.

Les inventeurs de la présente invention estiment toutefois que le recours à des capillaires pour alimenter une colonne de chromatographie est avantageux, notamment parce qu'il permet une connexion avec d'autres équipements en amont ou en aval du dispositif de chromatographie, par exemple avec un injecteur ou un détecteur. En se privant de connexion par capillaire, il est difficile d'utiliser des équipements commerciaux disponibles. A cet égard, le système décrit dans la demande référencée ci-dessus impose l'utilisation, en amont et en aval de la colonne de chromatographie, d'éléments intégrés sur une même plateforme micro-fluidique, de façon à permettre une interconnexion sans capillaire.

Il se pose le problème de concevoir une colonne de chromatographie apte à être raccordée, par des capillaires, à des dispositifs d'injection ou d'analyse, la connexion avec les capillaires, en amont et en aval de la colonne, étant réversible et simple.

Il se pose également le problème de rendre l'utilisation de capillaire compatible avec une colonne de chromatographie destinée à être mise en oeuvre à haute température.

US 2005042149 A1 divulgue un dispositif de séparation microfluidique modulaire comprenant un substrat fonctionnel et un substrat de connexion.

### EXPOSÉ DE L'INVENTION

La présente invention vise notamment à résoudre ces problèmes.

Un objet de la présente invention est de prévoir un dispositif de chromatographie dans lequel une colonne de chromatographie est raccordée à un substrat dit de connexion ou socle fluidique, permettant d'assurer un écoulement fluidique dans la colonne de chromatographie, un tel dispositif permettant de changer de substrat de connexion simplement.

La présente invention concerne un dispositif de chromatographie, comprenant au moins :
- un substrat fonctionnel, comportant un canal s'étendant entre un premier et un deuxième orifices débouchant sur une première face du substrat fonctionnel, le canal comprenant une paroi interne recouverte d'une couche de fonctionnalisation;
- ladite première face du substrat fonctionnel étant disposée contre une première face d'un substrat de connexion, comportant un troisième et un quatrième orifices débouchant sur ladite première face du substrat de connexion, de sorte que les premier et deuxième orifices soient disposés respectivement en regard des troisième et quatrième orifices ;
- le substrat de connexion étant raccordé à un premier et un deuxième capillaires collés respectivement dans une première (9-1) et une deuxième (9-2) zones de connexion, les première et deuxième zones de connexion débouchant sur une tranche du substrat de connexion,
   le substrat de connexion comportant un premier circuit fluidique s'étendant entre le premier capillaire et le troisième orifice et comportant un deuxième circuit fluidique s'étendant entre le deuxième capillaire et le quatrième orifice ;
   le substrat de connexion comportant un capot ou couvercle assemblé sur une partie du substrat de connexion dans laquelle sont réalisés les circuits fluidiques pour fermer de façon étanche les zones de connexion fluidique et les circuits fluidiques; et
- un moyen de maintien adapté à maintenir de façon temporaire ladite première face du substrat fonctionnel en appui contre ladite première face du substrat de connexion, de façon à permettre le passage étanche d'un fluide entre les premier et deuxième capillaires, à travers le premier circuit fluidique, le canal du substrat fonctionnel et le deuxième circuit fluidique.

Un avantage d'un tel dispositif de chromatographie réside dans le fait que le substrat de connexion est indépendant du substrat fonctionnel. Le substrat fonctionnel et le substrat de connexion sont assemblés seulement de façon temporaire par l'intermédiaire du moyen de maintien. Ceci permet de changer facilement le substrat fonctionnel et/ou le substrat de connexion lorsque souhaité.

Les premier et deuxième capillaires sont raccordés au substrat de connexion, notamment par collage. Cela permet de raccorder le dispositif de chromatographie à différents types d'équipements annexes, par exemple à un injecteur placé en amont et/ou à un détecteur disposé en aval. Le substrat de connexion permet de tester autant de substrats fonctionnels que l'on souhaite sans avoir à réitérer d'étape fastidieuse de raccordement de capillaires. Ainsi, le substrat de connexion peut être maintenu connecté à des équipements annexes, à l'aide du premier et/ou du deuxième capillaire, le substrat fonctionnel pouvant alors être changé sans difficulté.

Le canal du substrat fonctionnel peut être une colonne de chromatographie ou un pré-concentrateur. Par pré-concentrateur, on entend un canal ou une chambre dont les parois internes sont revêtues d'un matériau, ou phase stationnaire, apte à adsorber, de façon réversible, au moins une espèce, par exemple une espèce gazeuse. Chaque espèce retenue par adsorption peut alors être libérée en chauffant le pré-concentrateur, de manière à entraîner une désorption de l'espèce par la phase stationnaire.

Selon un mode de réalisation de la présente invention, le substrat de connexion comprend une première et une deuxième tranchées annulaires entourant respectivement les troisième et quatrième orifices, les première et deuxième tranchées étant configurées pour recevoir respectivement un premier et un deuxième joints d'étanchéité. La mise en place des joints dans les tranchées permet d'assurer l'étanchéité du dispositif de chromatographie.

Selon un mode de réalisation de la présente invention, le substrat fonctionnel comprend une troisième et une quatrième tranchées annulaires entourant respectivement les premier et deuxième orifices, les troisième et quatrième tranchées étant configurées pour recevoir respectivement le premier et le deuxième joints d'étanchéité. Ceci permet d'assurer l'alignement entre le substrat fonctionnel et le substrat de connexion.

Les joints d'étanchéité peuvent être des joints toriques, par exemple en silicone. Le silicone a en effet un bonne tenue en température, par exemple dans la gamme de températures comprises entre environ 250 et 300 °C, cette gamme de température permettant l'analyse de composés lourds par la colonne de chromatographie ou la régénération de la colonne après un certain nombre d'analyses.

La dimension caractéristique du canal et celle des premier et deuxième circuits fluidiques peuvent être comprises entre environ 50 et 500 µm.

Par dimension caractéristique du canal, on entend la dimension du canal dans la direction perpendiculaire à la direction de l'écoulement d'un fluide dans le canal, par exemple le diamètre du canal dans le cas où le canal est de section circulaire. De façon similaire, par dimension caractéristique des circuits fluidiques, on entend la dimension des circuits fluidiques dans la direction perpendiculaire à la direction de l'écoulement d'un fluide dans les circuits fluidiques.

Le diamètre intérieur des premier et deuxième capillaires peut être compris entre environ 50 et 250 µm et le diamètre extérieur des premier et deuxième capillaires peut être compris entre environ 150 et 450 µm.

Selon un mode de réalisation de la présente invention, le dispositif de chromatographie comprend en outre un système de chauffage disposé contre une deuxième face du substrat fonctionnel opposée à ladite première face du substrat fonctionnel. Le système de chauffage est destiné à chauffer principalement le substrat fonctionnel, en particulier le canal du substrat fonctionnel.

Selon un mode de réalisation de la présente invention, la surface de ladite première face du substrat de connexion est supérieure à la surface de ladite première face du substrat fonctionnel, et notamment telle qu'au moins des portions de ladite première face du substrat de connexion disposées au voisinage des première et deuxième zones de connexion ne soient pas en contact avec le substrat fonctionnel.

La partie de la surface du substrat de connexion exposée à l'air ambiant permet une dissipation de la chaleur. En outre, ceci permet d'éloigner du substrat fonctionnel la colle assurant le raccordement des capillaires. Ainsi, lorsque le substrat fonctionnel est chauffé, la température maximale atteinte dans les zones de connexion des capillaires est diminuée.

Selon un mode de réalisation de la présente invention, le substrat de connexion comprend des motifs d'isolation thermique autour des première et deuxième zones de connexion. Les motifs d'isolation thermique permettent, en réduisant la conduction thermique, de réduire la température maximale atteinte dans les zones de connexion des capillaires, notamment lorsque le substrat fonctionnel est chauffé. Ces motifs peuvent par exemple prendre la forme de tranchées ou d'ajours réalisés dans le substrat de connexion, de façon à augmenter la surface du substrat de connexion exposée à l'air.

Selon un mode de réalisation de la présente invention, le moyen de maintien comprend une première et une seconde pièces adaptées à être disposées de part et d'autre de l'ensemble formé du substrat fonctionnel et du substrat de connexion.

Selon un mode de réalisation de la présente invention, le dispositif de chromatographie comprend en outre au moins un conduit thermique dans la pièce du moyen de maintien disposée en regard d'une deuxième face du substrat de connexion opposée à ladite première face du substrat de connexion. Un fluide de refroidissement est destiné à circuler dans le conduit thermique. Le (ou les) conduit(s) thermique(s) permet(tent) d'augmenter le transfert de chaleur vers l'extérieur du dispositif de chromatographie et donc de réduire la température maximale atteinte dans les zones de connexion des capillaires.

Un avantage d'un dispositif de chromatographie tel que celui décrit ci-dessus réside dans le fait que la sollicitation en température de la colle des zones de connexion des capillaires est diminuée. Il en résulte que, même s'il convient de chauffer le substrat fonctionnel à des températures supérieures à environ 200 °C pour certaines utilisations du dispositif de chromatographie, les capillaires peuvent être raccordés au substrat de connexion en utilisant des colles couramment utilisées dans les dispositifs de chromatographie.

La présente invention concerne également un procédé de fonctionnalisation d'un dispositif de chromatographie du type de celui décrit ci-dessus, comprenant les étapes suivantes :
- disposer et maintenir ladite première face du substrat fonctionnel contre ladite première face d'un premier substrat de connexion, de sorte que les premier et deuxième orifices soient disposés respectivement en regard des troisième et quatrième orifices ;
- introduire un liquide de fonctionnalisation par le premier capillaire, de sorte que le liquide de fonctionnalisation passe dans le premier circuit fluidique, le canal et le deuxième circuit fluidique, et sorte par le deuxième capillaire ;
- procéder à un séchage, éventuellement sous vide, du canal, de façon à former une couche de fonctionnalisation recouvrant la paroi interne du canal ; et
- remplacer le premier substrat de connexion par un second substrat de connexion dont les premier et deuxième circuits fluidiques et les premier et deuxième capillaires n'ont pas été traversés par le liquide de fonctionnalisation.

Un avantage d'un tel procédé réside dans le fait que le premier substrat de connexion peut être changé après la fonctionnalisation par voie liquide du canal du substrat fonctionnel. Ceci permet d'éviter, lors de l'analyse ultérieure d'un échantillon, une rétention d'échantillon en amont et en aval du canal du substrat fonctionnel, dans les capillaires et/ou dans les circuits fluidiques du second substrat de connexion. En outre, les parois des capillaires du second substrat de connexion n'étant pas recouvertes de phase stationnaire ou de couche de fonctionnalisation, il n'est pas nécessaire de chauffer les capillaires pour éviter une adsorption d'espèces sur les parois des capillaires lors de l'analyse d'un échantillon.

Un autre avantage d'un tel procédé est lié au fait qu'un substrat de connexion ayant déjà servi à fonctionnaliser un substrat fonctionnel peut être utilisé pour fonctionnaliser un (ou d') autre(s) substrat(s) fonctionnel(s). Il en résulte une diminution de la consommation de substrats de connexion et une réduction du nombre d'étapes de collage de capillaires, ces étapes étant fastidieuses, coûteuses en temps et en ressources humaines.

Un autre avantage d'un tel procédé est lié au fait qu'un substrat de connexion, dont ni les circuits fluidiques ni les capillaires n'ont été recouverts d'une phase stationnaire, peut servir successivement de socle fluidique pour différents substrats fonctionnels, par exemple pour des substrats fonctionnels dont les canaux sont recouverts de phases stationnaires différentes. Un même substrat de connexion peut ainsi être utilisé pour une série d'analyses dans différentes colonnes de chromatographie.

### BRÈVE DESCRIPTION DES DESSINS

D'autres caractéristiques et avantages de l'invention ressortiront plus clairement à la lecture de la description suivante et en référence aux dessins annexés, donnés à titre uniquement illustratif et nullement limitatif.
La figure 1A est une vue en coupe d'un dispositif de chromatographie selon l'invention.
La figure 1B est une vue de dessus d'un substrat de connexion.
La figure 2 est une vue en coupe représentant de façon schématique le positionnement de joints dans un dispositif de chromatographie tel que celui représenté en figure 1A.
La figure 3 est une vue en coupe représentant de façon schématique un autre exemple d'un dispositif de chromatographie selon l'invention.
Les figures 4A et 4C sont des vues en coupe de variantes d'un dispositif de chromatographie selon l'invention.
La figure 4B est une vue de dessus d'un substrat de connexion adapté aux dispositifs de chromatographie représentés sur les figures 4A et 4C.
Les figures 5A à 5C sont des photographies d'un exemple de réalisation de l'invention. La figure 5A est une photographie d'un moyen de maintien. La figure 5B est une photographie d'un dispositif de chromatographie. La figure 5C est une photographie d'un substrat fonctionnel et d'un substrat de connexion.
Les figures 6A et 6B sont des chromatogrammes obtenus avec un dispositif de chromatographie selon l'invention, respectivement dans le cas où le même substrat de connexion a été utilisé pour la fonctionnalisation et pour l'analyse chromatographique et dans le cas où le substrat de connexion a été changé après la fonctionnalisation.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

On décrit ci-dessous un dispositif de chromatographie dans lequel une colonne de chromatographie est raccordée à un substrat dit de connexion ou socle fluidique, permettant d'assurer un écoulement fluidique dans la colonne de chromatographie, un tel dispositif permettant de changer de substrat de connexion simplement.

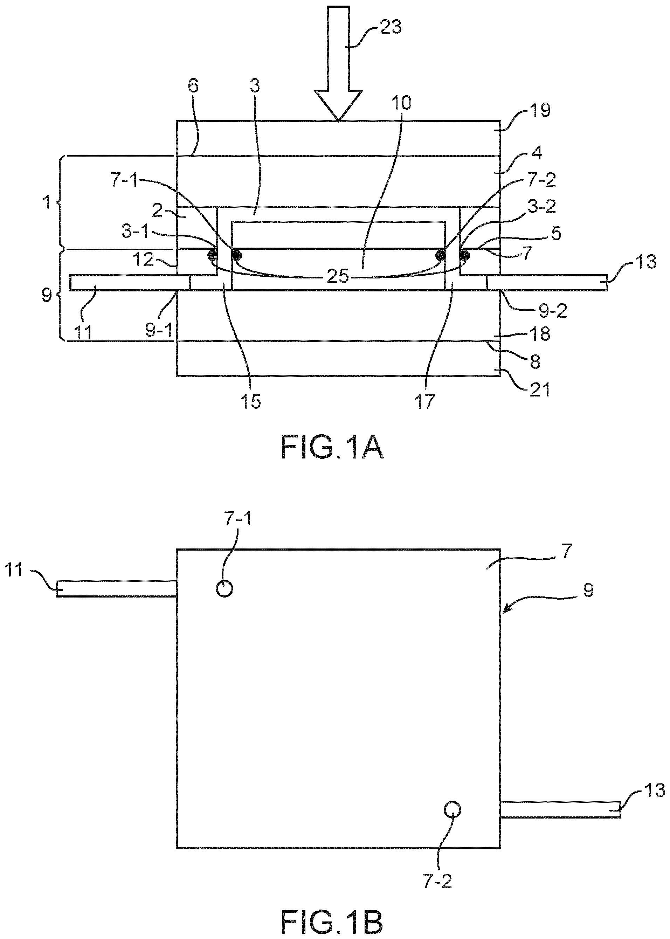

La figure 1A est une vue en coupe représentant de façon schématique un exemple d'un tel dispositif de chromatographie. La figure 1B est une vue de dessus d'un substrat de connexion pouvant être utilisé dans un tel dispositif de chromatographie.

Un substrat fonctionnel 1 comporte une zone fonctionnelle ou canal 3. Le canal 3 s'étend entre un premier orifice 3-1 et un deuxième orifice 3-2 débouchant sur une première face 5 du substrat fonctionnel 1. La première face 5 correspond à l'une des deux faces principales du substrat fonctionnel 1.

De préférence, le substrat fonctionnel 1 est en silicium. Eventuellement, le substrat fonctionnel 1 peut être en verre.

Pour les utilisations du dispositif de chromatographie nécessitant des changements de température du canal 3, par exemple pour des analyses avec gradient thermique, on choisira de préférence de réaliser le substrat fonctionnel 1 en silicium car le silicium présente une bonne conductivité thermique.

Le canal 3 est par exemple une colonne de chromatographie, par exemple une micro-colonne de chromatographie.

Le substrat fonctionnel 1 comporte en outre un capot ou couvercle 4, par exemple en silicium ou en verre, qui est assemblé au-dessus du canal 3. Le capot 4 permet de fermer de façon étanche le canal 3. Le capot 4 est fixé, par exemple par scellement anodique ou par scellement moléculaire, sur une partie 2 du substrat fonctionnel 1 dans laquelle est réalisé le canal 3.

La première face 5 du substrat fonctionnel 1 est destinée à être disposée contre une première face 7 d'un substrat de connexion ou socle fluidique 9, comportant un troisième orifice 7-1 et un quatrième orifice 7-2, de sorte que le premier orifice 3-1 et le deuxième orifice 3-2 du substrat fonctionnel 1 soient disposés respectivement en regard du troisième orifice 7-1 et du quatrième orifice 7-2 du substrat de connexion 9. La première face 7 correspond à l'une des deux faces principales du substrat de connexion 9.

L'alignement entre le substrat fonctionnel 1 et le substrat de connexion 9 est par exemple effectué en alignant les bords d'un substrat avec les bords de l'autre substrat, dans le cas où les deux substrats sont de même forme et de mêmes dimensions. Eventuellement, la première face 7 du substrat de connexion 9 peut comprendre des motifs d'alignement pour améliorer l'alignement du substrat de connexion 9 avec le substrat fonctionnel 1.

Le substrat de connexion 9 comporte sur sa tranche 12 des première et deuxième zones de connexions fluidiques 9-1 et 9-2 permettant de le connecter à des équipements extérieurs tels qu'un injecteur en entrée et un détecteur en sortie, par l'intermédiaire de capillaires 11, 13.

Par le terme « tranche », on entend la surface latérale du substrat de connexion 9, autrement dit la surface du substrat de connexion 9 qui est sensiblement perpendiculaire aux faces principales du substrat de connexion.

Le substrat de connexion 9 comporte un premier circuit fluidique 15, s'étendant entre la première zone de connexion fluidique 9-1 et le troisième orifice 7-1, et un deuxième circuit fluidique 17, s'étendant entre la deuxième zone de connexion fluidique 9-2 et le quatrième orifice 7-2.

Une extrémité d'un premier capillaire 11 et une extrémité d'un deuxième capillaire 13 sont respectivement disposées dans la première zone de connexion fluidique 9-1 et dans la deuxième zone de connexion fluidique 9-2 du substrat de connexion 9. Les capillaires 11 et 13 sont collés au substrat de connexion 9 dans les première et deuxième zones de connexion fluidique 9-1, 9-2.

Le substrat de connexion 9 permet d'assurer les fonctions d'alimentation fluidique du dispositif de chromatographie.

Le substrat de connexion 9 peut être en silicium ou en verre ou en en céramique. Le substrat de connexion 9 peut être en un matériau thermiquement isolant, par exemple en un matériau thermiquement isolant pouvant résister à des températures de quelques centaines de degrés Celsius. Le substrat de connexion 9 est par exemple en polyétheréthercétone (PEEK, « PolyEtherEtherKetone »).

Le substrat de connexion 9 comporte en outre un capot ou couvercle 18, par exemple en silicium ou en verre, qui est assemblé sur une partie 10 du substrat de connexion 9 dans laquelle sont réalisés les circuits fluidiques 15 et 17. Le capot 18 permet de fermer de façon étanche les zones de connexions fluidiques 9-1 et 9-2 et les circuits fluidiques 15 et 17. Le capot 18 est fixé sur la partie 10 du substrat de connexion 9 par exemple par scellement anodique ou par scellement moléculaire.

Le canal 3 du substrat fonctionnel 1 et les circuits fluidiques 15 et 17 du substrat de connexion 9 peuvent être formés par des procédés couramment utilisés pour fabriquer des composants microélectroniques. Le canal 3 et les circuits fluidiques 15 et 17 sont par exemple formés par photolithographie et gravure DRIE (« Deep Reactive Ion Etching », gravure ionique réactive profonde). Ces méthodes permettent de former avec une résolution adéquate les motifs souhaités pour le canal 3 et les circuits fluidiques 15 et 17.

Dans un dispositif de chromatographie du type de celui illustré en figures 1A-1B en fonctionnement, un fluide est destiné à être introduit par l'un des deux capillaires, par exemple le premier capillaire 11, puis à circuler dans le premier circuit fluidique 15, le canal 3 et le deuxième circuit fluidique 17, et à sortir par l'autre capillaire, par exemple le deuxième capillaire 13. Le fluide peut être gazeux ou liquide.

La dimension caractéristique du canal 3 et celle des circuits fluidiques 15, 17 peuvent être comprises entre environ 50 et 500 µm, par exemple de l'ordre de 100 µm.

Les capillaires 11 et 13 peuvent être des tubes de silice fondue recouverts d'une gaine en polymère, par exemple en polyimide.

Le diamètre intérieur des capillaires 11, 13 peut être compris entre environ 50 et 250 µm, par exemple de l'ordre de 100 µm. Le diamètre extérieur des capillaires 11, 13 peut être compris entre environ 150 et 450 µm, par exemple de l'ordre de 360 µm.

De façon à permettre le passage étanche d'un fluide dans le canal 3 et les circuits fluidiques 15 et 17, la première face 5 du substrat fonctionnel 1 est maintenue contre la première face 7 du substrat de connexion 9 par un moyen de maintien 19, 21. Le moyen de maintien comprend une pièce de répartition de la pression 19 et une pièce d'appui 21 disposées de part et d'autre de l'ensemble formé par le substrat fonctionnel 1 et le substrat de connexion 9.

La pièce de répartition de la pression 19 est par exemple disposée contre une deuxième face principale 6 du substrat fonctionnel 1 opposée à la première face 5 du substrat fonctionnel 1. La pièce d'appui 21 est par exemple disposée contre une deuxième face principale 8 du substrat de connexion 9 opposée à la première face 7 du substrat de connexion 9.

De préférence, la pièce de répartition de la pression 19 et la pièce d'appui 21 sont réalisées en un matériau thermiquement isolant et résistant à des températures de quelques centaines de degrés. La pièce de répartition de la pression 19 et la pièce d'appui 21 sont par exemple en céramique ou en acier inoxydable. La pièce d'appui 21 peut également être en PEEK.

La pièce d'appui 21 peut être réalisée sous la forme d'une grille, les mailles assurant la tenue mécanique et les ouvertures permettant une meilleure dissipation de la chaleur.

L'étanchéité est obtenue en appliquant une pression mécanique sur l'assemblage du substrat fonctionnel 1 et du substrat de connexion 9. La pression mécanique (représentée par une flèche 23 sur la figure 1A) est par exemple appliquée au centre du substrat fonctionnel 1, par l'intermédiaire de la pièce de répartition de la pression 19. L'utilisation de la pièce de répartition de la pression 19 permet d'utiliser un seul point de pression et donc de réduire les risques de rupture du substrat fonctionnel.

La pression mécanique est par exemple appliquée en utilisant une pince de serrage ou une sauterelle mécanique ou une bride ou un système vis/écrou.

Le moyen de maintien 19, 21 et l'application d'une pression mécanique permettent d'assembler le substrat fonctionnel 1 et le substrat de connexion 9 de façon temporaire. Les substrats fonctionnel et de connexion peuvent facilement être séparés, en relâchant la pression mécanique appliquée par l'intermédiaire du moyen de maintien 19, 21, ce qui permet notamment de déconnecter le canal 3 des circuits fluidiques 15, 17.

L'étanchéité est en outre assurée par des joints 25.

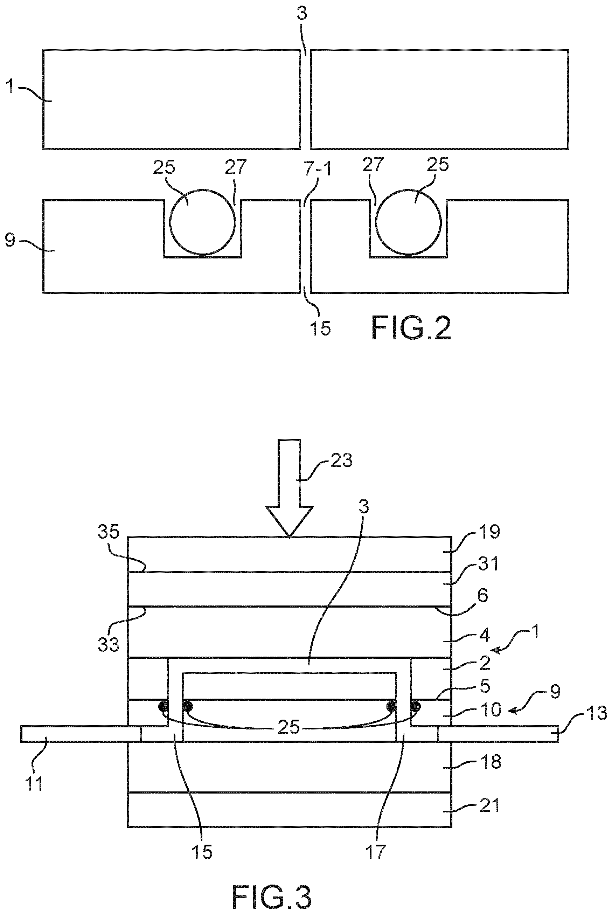

La figure 2 est une vue en coupe représentant de façon schématique le positionnement de joints dans un dispositif de chromatographie tel que celui illustré en figures 1A-1B.

Des joints 25 sont positionnés dans des tranchées 27 gravées dans le substrat de connexion 9. Une tranchée 27, par exemple une tranchée annulaire, entoure chaque orifice 7-1, 7-2 du substrat de connexion 9. Chaque tranchée 27 est configurée pour recevoir un joint 25. La figure 2 illlustre le positionnement d'un joint 25 dans une première tranchée 27 entourant le troisième orifice 7-1 à l'extrémité du circuit fluidique 15.

Lorsqu'une pression mécanique est appliquée, la surface plane du substrat fonctionnel 1 assure l'écrasement des joints 25. Ceci permet de minimiser les volumes morts entre le substrat fonctionnel 1 et le substrat de connexion 9 et permet d'assurer l'étanchéité du dispositif de chromatographie.

Les joints 25 sont par exemple des joints toriques.

Avantageusement, les joints 25 sont en silicone. Le silicone présente en effet un bonne tenue en température, par exemple dans la gamme de températures comprises entre environ 250 et 300 °C.

Le diamètre interne des joints 25 est par exemple de l'ordre de 1 mm et le diamètre de la section des joints 25 est par exemple de l'ordre de 0,5 mm.

Des tranchées, par exemple des tranchées annulaires, peuvent également être réalisées dans le substrat fonctionnel 1, une tranchée entourant chaque orifice 3-1, 3-2 du substrat fonctionnel 1 et étant configurée pour recevoir un joint 25. Lorsque le substrat fonctionnel 1 est disposé contre le substrat de connexion 9, chaque tranchée du substrat fonctionnel 1 se trouve alors en regard d'une tranchée 27 du substrat de connexion 9. La mise en place des joints 25 dans les tranchées permet de réduire les volumes morts entre le substrat fonctionnel 1 et le substrat de connexion 9 et permet d'assurer l'étanchéité du dispositif de chromatographie. En outre, ceci permet d'assurer l'alignement entre le substrat fonctionnel 1 et le substrat de connexion 9.

Un avantage d'un dispositif de chromatographie du type de celui décrit en relation avec les figures 1A-1B réside dans le fait que le substrat de connexion 9 est indépendant du substrat fonctionnel 1. Les substrats 1 et 9 sont assemblés seulement de façon temporaire par l'intermédiaire du moyen de maintien 19, 21 et de l'application d'une pression mécanique. Ceci permet de changer facilement le substrat fonctionnel 1 et/ou le substrat de connexion 9 lorsque souhaité.

On décrit ci-dessous un procédé de fonctionnalisation par voie liquide d'un dispositif de chromatographie du type de celui décrit en relation avec les figures 1A-1B.

Par fonctionnalisation par voie liquide, on entend l'introduction d'un liquide dans le canal (ou zone fonctionnelle) du dispositif de chromatographie de façon à recouvrir la paroi interne du canal d'une phase stationnaire ou couche de fonctionnalisation.

Un exemple de phase stationnaire couramment utilisée pour recouvrir la paroi interne d'une colonne de chromatographie est le polydiméthylsiloxane (PDMS).

On procède d'abord à l'assemblage temporaire du substrat fonctionnel 1 et d'un premier substrat de connexion 9. On dispose la première face 5 du substrat fonctionnel 1 contre la première face 7 d'un premier substrat de connexion 9, de sorte que le premier orifice 3-1 et le deuxième orifice 3-2 du substrat fonctionnel 1 soient disposés respectivement en regard du troisième orifice 7-1 et du quatrième orifice 7-2 du premier substrat de connexion 9. Des joints 25 sont préalablement disposés dans les tranchées 27 comme cela est illustré en figure 2. On applique une pression mécanique par l'intermédiaire du moyen de maintien 19, 21 pour maintenir la première face 5 du substrat fonctionnel 1 contre la première face 7 du premier substrat de connexion 9 et assurer l'étanchéité de l'assemblage.

On procède ensuite à la fonctionnalisation par voie liquide du substrat fonctionnel 1. Un liquide de fonctionnalisation est introduit dans le dispositif de chromatographie, par exemple par le premier capillaire 11, puis circule dans le circuit premier fluidique 15, le canal 3 et le deuxième circuit fluidique 17, et sort par l'autre capillaire, par exemple le deuxième capillaire 13. On procède à un séchage, par exemple sous vide, du dispositif de manière à retirer le solvant du liquide de fonctionnalisation tout en formant une couche mince de fonctionnalisation, dite phase stationnaire, recouvrant la paroi interne du canal 3.

On a ainsi recouvert d'une phase stationnaire la paroi interne du canal ou zone fonctionnelle 3 du substrat fonctionnel 1. On dit que le canal 3 est fonctionnalisé.

Lors de la fonctionnalisation du substrat fonctionnel, les parois internes des capillaires 11 et 13 et les parois internes des circuits fluidiques 15 et 17 du substrat de connexion 9 ont également été recouvertes d'une phase stationnaire.

On procède alors au remplacement du premier substrat de connexion 9 qui a été utilisé pour la fonctionnalisation du substrat fonctionnel 1 par un second substrat de connexion. Pour cela, on relâche la pression mécanique appliquée sur l'assemblage des substrats 1 et 9, ce qui permet de détacher le premier substrat de connexion 9 du substrat fonctionnel 1. On peut alors remplacer le premier substrat de connexion 9 par un second substrat de connexion dont les parois internes des circuits fluidiques 15, 17 n'ont pas été recouvertes de phase stationnaire, ni les parois internes des capillaires 11, 13 qui lui sont raccordés.

Un avantage d'un tel procédé réside dans le fait que le premier substrat de connexion 9 peut être changé après la fonctionnalisation par voie liquide du canal 3 du substrat fonctionnel 1. Ceci permet d'éviter, lors de l'analyse ultérieure d'un échantillon, une rétention d'échantillon en amont et en aval du canal 3 du substrat fonctionnel 1, dans les capillaires 11, 13 et/ou dans les circuits fluidiques 15, 17 du second substrat de connexion. En outre, les parois des capillaires 11, 13 du second substrat de connexion n'étant pas recouvertes de phase stationnaire, il n'est pas nécessaire de chauffer les capillaires pour éviter une adsorption d'espèces sur les parois des capillaires lors de l'analyse d'un échantillon.

Un autre avantage d'un tel procédé est lié au fait qu'un substrat de connexion ayant déjà servi à fonctionnaliser un substrat fonctionnel peut être utilisé pour fonctionnaliser un (ou d') autre(s) substrat(s) fonctionnel(s). Il en résulte une diminution de la consommation de substrats de connexion et une réduction du nombre d'étapes de collage de capillaires, ces étapes étant fastidieuses, coûteuses en temps et en ressources humaines.

Un autre avantage d'un tel procédé est lié au fait qu'un substrat de connexion, dont ni les circuits fluidiques ni les capillaires n'ont été recouverts d'une phase stationnaire, peut servir successivement de socle fluidique pour différents substrats fonctionnels, par exemple pour des substrats fonctionnels dont les canaux sont recouverts de phases stationnaires différentes. Un même substrat de connexion peut ainsi être utilisé pour une série d'analyses dans différentes colonnes de chromatographie.

La figure 3 est une vue en coupe représentant de façon schématique un autre exemple d'un dispositif de chromatographie. Les éléments communs avec ceux du dispositif de chromatographie des figures 1A-1B sont désignés par les mêmes références et ne sont pas décrits à nouveau ci-après.

Un système de chauffage 31, comportant par exemple une résistance chauffante ou un substrat chauffant, est disposé entre le substrat fonctionnel 1 et la pièce de répartition de la pression 19. Le système de chauffage 31 est destiné à chauffer principalement le substrat fonctionnel 1, de façon à chauffer notamment le canal 3. Les faces 33, 35 du système de chauffage 31, respectivement en contact avec le capot 4 du substrat fonctionnel 1 et avec la pièce de répartition de la pression 19, présentent de préférence une surface inférieure ou égale à la surface des première et deuxième faces 5, 6 du substrat fonctionnel 1, de façon à réduire la température maximale atteinte dans les zones de connexion des capillaires.

Le système de chauffage 31 peut être formé d'un substrat dont une des faces, par exemple la face 33 en contact avec le substrat fonctionnel 1, comporte des motifs en un matériau conducteur, par exemple en un métal tel que le platine. Le matériau conducteur peut être formé en utilisant les techniques de dépôt de couches minces couramment utilisées au cours de procédés de fabrication de composants microélectroniques. En connectant électriquement la résistance chauffante obtenue à un générateur de tension, on obtient, par effet Joule, une source de chaleur. De préférence, le substrat du système de chauffage 31 est en silicium, le silicium présentant une bonne conductivité thermique.

Le substrat de connexion 9 peut inclure un système de chauffage du substrat fonctionnel 1. Dans ce cas, en plus des fonctions d'alimentation fluidique du dispositif de chromatographie, le substrat de connexion 9 permet également d'assurer la gestion thermique du dispositif de chromatographie.

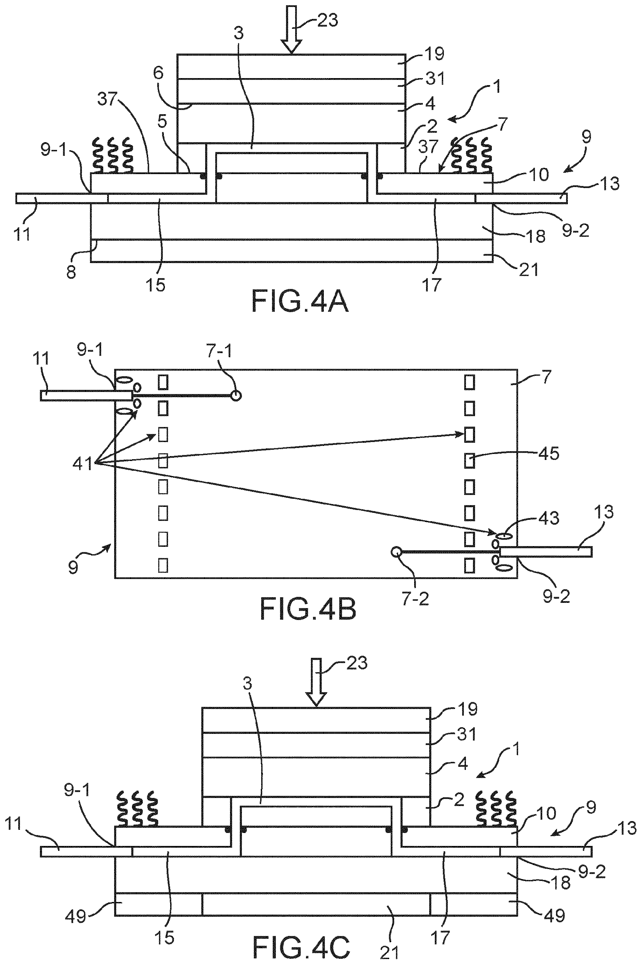

La figure 4A est une vue en coupe représentant de façon schématique une variante d'un dispositif de chromatographie tel que celui illustré en figure 3.

Dans cette variante, les première et deuxième faces 7, 8 du substrat de connexion 9 présentent une surface supérieure à celle des première et deuxième faces 5, 6 du substrat fonctionnel 1. Une partie 37 de la première face 7 du substrat de connexion 9 est ainsi exposée à l'air ambiant et n'est pas en contact avec le substrat fonctionnel 1. La partie 37 exposée à l'air ambiant comprend par exemple au moins les portions de la première face 7 disposées au voisinage des zones de connexion 9-1, 9-2 des capillaires.

Dans le cas où il convient de chauffer le substrat fonctionnel 1 pour réaliser une analyse de chromatographie, la partie 37 de la surface du substrat de connexion 9 exposée à l'air ambiant permet une dissipation de la chaleur. En outre, ceci permet d'éloigner du substrat fonctionnel 1, chauffé par le système de chauffage 31, la colle disposée dans les zones de connexions 9-1, 9-2 des capillaires du substrat de connexion 9.

La figure 4B est une vue de dessus, en coupe au niveau de la face 7, représentant de façon schématique une autre variante d'un dispositif de chromatographie tel que celui illustré en figure 3, dans laquelle le substrat de connexion 9 est ajouré, ce qui permet de réduire son échauffement.

Dans cette variante, des motifs d'isolation thermique 41 sont formés dans le substrat de connexion 9 par des ouvertures débouchant sur la première face 7 du substrat de connexion 9. Les motifs 41 comprennent par exemple des ouvertures 43 disposées autour des zones de connexion 9-1 et 9-2 des capillaires 11, 13. Il pourrait également s'agir de tranchées. Les motifs 41 peuvent comprendre en outre des rangées d'ouvertures 45 disposées à une certaine distance des zones de connexion 9-1 et 9-2, les rangées d'ouvertures 45 étant orientées sensiblement perpendiculairement aux capillaires 11, 13. Les motifs 41 permettent, en réduisant la conduction thermique et en augmentant la surface du substrat de connexion 9 exposée à l'air, de réduire la température maximale atteinte dans les zones de connexion 9-1, 9-2 des capillaires.

Les motifs d'isolation thermique 41 peuvent être formés par des procédés couramment utilisés pour fabriquer des composants microélectroniques, par exemple par photolithographie et gravure DRIE.

La figure 4C est une vue en coupe représentant de façon schématique une autre variante d'un dispositif de chromatographie tel que celui illustré en figure 3.

Dans cette variante, des conduits thermiques 49 sont disposés dans la pièce d'appui 21. Un fluide de refroidissement est destiné à circuler dans les conduits thermiques 49. Les conduits thermiques 49 permettent d'augmenter le transfert de chaleur vers l'extérieur du dispositif de chromatographie et donc de réduire la température maximale atteinte dans les zones de connexion 9-1, 9-2 des capillaires.

Au moins deux des différentes variantes d'un dispositif de chromatographie décrites en relation avec les figures 4A-4C peuvent être combinées dans un même dispositif de chromatographie. Dans le cas où les variantes des figures 4A et 4B sont combinées, les rangées d'ouvertures 45 sont par exemple formées dans la partie 37 du substrat de connexion 9 exposée à l'air ambiant (comme cela est illustré en figure 4B).

Un avantage de dispositifs de chromatographie du type de ceux illustrés en figures 4A-4C réside dans le fait que la sollicitation en température de la colle des zones de connexion des capillaires est diminuée. Il en résulte que, même s'il convient de chauffer le substrat fonctionnel à des températures supérieures à environ 200 °C pour certaines utilisations du dispositif de chromatographie, les capillaires peuvent être raccordés au substrat de connexion en utilisant des colles couramment utilisées dans les dispositifs de chromatographie.

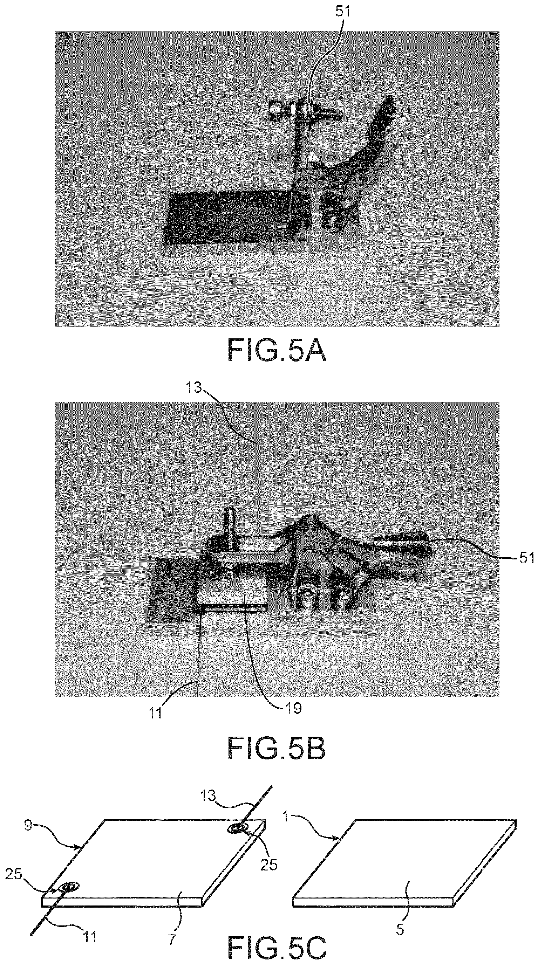

Les figures 5A-5C sont des photographies illustrant un exemple de réalisation d'un dispositif de chromatographie. Une sauterelle mécanique 51 est utilisée pour appliquer une pression mécanique sur l'assemblage du substrat fonctionnel 1 et du substrat de connexion 9, par l'intermédiaire de la pièce de répartition de la pression 19.

La surface des faces 5, 6 du substrat fonctionnel 1 et celle des faces 7,8 du substrat de connexion 9 sont de l'ordre de 2x2 cm².

La longueur du canal 3 du substrat fonctionnel 1 est de l'ordre de 2 m. La section du canal 3 présente une surface de l'ordre de 80x80 µm².

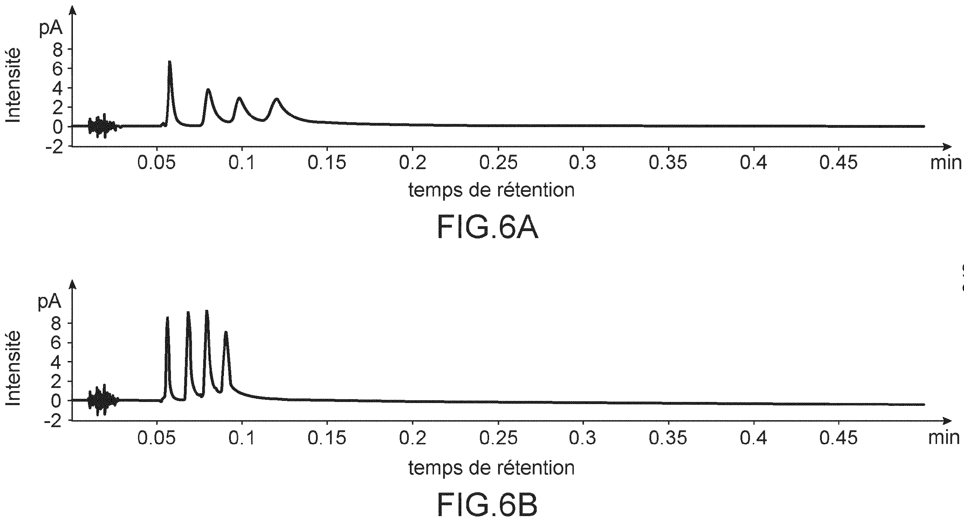

Les figures 6A et 6B sont des chromatogrammes obtenus avec un dispositif de chromatographie du type de celui décrit en relation avec les figures 1A-1B. La figure 6A correspond au cas où le même substrat de connexion a été utilisé pour la fonctionnalisation du substrat fonctionnel et pour l'analyse chromatographique. La figure 6B correspond au cas où le substrat de connexion a été changé après la fonctionnalisation du substrat fonctionnel et avant l'analyse chromatographique.

La fonctionnalisation du substrat fonctionnel a été réalisée en utilisant une solution contenant du PDMS à une concentration de 4 mg/mL dans un mélange de pentane et de dichlorométhane. La fonctionnalisation a été réalisée selon le protocole couramment utilisé en chromatographie en phase gazeuse de fonctionnalisation en mode statique.

Pour réaliser l'analyse chromatographique, un des capillaires du dispositif de chromatographie a été connecté à l'injecteur et l'autre capillaire au détecteur de type FID (« Flame lonization Detector ») d'un appareil commercial de chromatographie en phase gazeuse de référence Agilent 7890.

Le mélange à analyser, qui a été injecté dans le dispositif de chromatographie, est un mélange de pentane, d'heptane, de toluène et d'octane. Le volume du mélange qui a été injecté est d'environ 0,02 µL, ce qui correspond à une quantité injectée d'environ 10 ng de chaque composé.

Les analyses ont été réalisées avec une température du four d'environ 40 °C. Le gaz porteur qui a été utilisé est de l'hélium, avec une pression partielle en entrée du dispositif de chromatographie d'environ 40 psi, ce qui correspond à un débit dans la colonne de chromatographie d'environ 1 mL/min.

Dans le cas où le même substrat de connexion a été utilisé pour la fonctionnalisation du substrat fonctionnel et pour l'analyse chromatographique (figure 6A), on constate que le temps de rétention dans la colonne de chromatographie est plus élevé que dans le cas où le substrat de connexion a été changé après la fonctionnalisation (figure 6B). Ceci est dû aux affinités entre les composés du mélange de gaz et la phase stationnaire en amont et en aval de la colonne de chromatographie. En outre, on constate que les pics sont dissymétriques sur le chromatogramme de la figure 6A.

Dans le cas où le substrat de connexion a été changé après la fonctionnalisation du substrat fonctionnel (figure 6B), on constate une augmentation de la finesse et de l'intensité des pics chromatographiques par rapport à ceux du chromatogramme de la figure 6A. En outre, les pics chromatographiques sont symétriques, ce qui peut être attribué à la réduction du bruit de fond. Le fait de changer de substrat de connexion après la fonctionnalisation du substrat fonctionnel permet d'obtenir une meilleure résolution en temps et une mesure plus sensible.

Bien que l'on ait pris comme exemple dans la description ci-dessus pour le canal ou zone fonctionnelle du substrat fonctionnel une colonne de chromatographie, le canal peut également être un pré-concentrateur.

L'invention s'applique à tout dispositif présentant un canal fluidique dont la surface interne est apte à interagir avec une espèce, en particulier une espèce gazeuse. Il s'agit en particulier d'une colonne de chromatographie ou d'un pré-concentrateur.

## Revendications

1. Dispositif de chromatographie, comprenant au moins :
- un substrat fonctionnel (1), comportant un canal (3) s'étendant entre un premier (3-1) et un deuxième (3-2) orifices débouchant sur une première face (5) du substrat fonctionnel, le canal (3) comprenant une paroi interne recouverte d'une couche de fonctionnalisation
- ladite première face (5) du substrat fonctionnel étant disposée contre une première face (7) d'un substrat de connexion (9), comportant un troisième (7-1) et un quatrième (7-2) orifices débouchant sur ladite première face (7) du substrat de connexion, de sorte que les premier (3-1) et deuxième (3-2) orifices soient disposés respectivement en regard des troisième (7-1) et quatrième (7-2) orifices,
- le substrat de connexion étant raccordé à un premier (11) et un deuxième (13) capillaires collés respectivement dans une première (9-1) et une deuxième (9-2) zones de connexion, les première (9-1) et deuxième (9-2) zones de connexion débouchant sur une tranche (12) du substrat de connexion (9), le substrat de connexion comportant un premier circuit fluidique (15) s'étendant entre le premier capillaire et le troisième orifice et comportant un deuxième circuit fluidique (17) s'étendant entre le deuxième capillaire et le quatrième orifice,
le substrat de connexion comportant un capot ou couvercle (18) assemblé sur une partie (10) du substrat de connexion (9) dans laquelle sont réalisés les circuits fluidiques (15, 17) pour fermer de façon étanche les zones de connexion fluidique (9-1, 9-2) et les circuits fluidiques (15, 17) ; et
- un moyen de maintien (19, 21, 51) adapté à maintenir de façon temporaire ladite première face (5) du substrat fonctionnel en appui contre ladite première face (7) du substrat de connexion, de façon à permettre le passage étanche d'un fluide entre les premier et deuxième capillaires, à travers le premier circuit fluidique, le canal du substrat fonctionnel et le deuxième circuit fluidique.

2. Dispositif de chromatographie selon la revendication 1, dans lequel le canal (3) du substrat fonctionnel (1) est une colonne de chromatographie ou un pré-concentrateur.

3. Dispositif de chromatographie selon la revendication 1 ou 2, dans lequel le substrat de connexion (9) comprend une première et une deuxième tranchées annulaires (27) entourant respectivement les troisième (7-1) et quatrième (7-2) orifices, les première et deuxième tranchées étant configurées pour recevoir respectivement un premier et un deuxième joints d'étanchéité (25).

4. Dispositif de chromatographie selon la revendication 3, dans lequel le substrat fonctionnel (1) comprend une troisième et une quatrième tranchées annulaires entourant respectivement les premier (3-1) et deuxième (3-2) orifices, les troisième et quatrième tranchées étant configurées pour recevoir respectivement le premier et le deuxième joints d'étanchéité (25).

5. Dispositif de chromatographie selon la revendication 3 ou 4, dans lequel les joints d'étanchéité (25) sont en silicone.

6. Dispositif de chromatographie selon l'une des revendications 3 à 5, dans lequel les joints d'étanchéité (25) sont des joints toriques.

7. Dispositif de chromatographie selon l'une des revendications 1 à 6, dans lequel la dimension caractéristique du canal (3) et celle des premier (15) et deuxième (17) circuits fluidiques sont comprises entre environ 50 et 500 µm.

8. Dispositif de chromatographie selon l'une des revendications 1 à 7, dans lequel le diamètre intérieur des premier (11) et deuxième (13) capillaires est compris entre environ 50 et 250 µm et dans lequel le diamètre extérieur des premier et deuxième capillaires est compris entre environ 150 et 450 µm.

9. Dispositif de chromatographie selon l'une des revendications 1 à 8, comprenant en outre un système de chauffage (31) disposé contre une deuxième face (6) du substrat fonctionnel (1) opposée à ladite première face (5) du substrat fonctionnel.

10. Dispositif de chromatographie selon l'une des revendications 1 à 9, dans lequel la surface de ladite première face (7) du substrat de connexion (9) est supérieure à la surface de ladite première face (5) du substrat fonctionnel (1), et dans lequel au moins des portions de ladite première face (7) du substrat de connexion (9) disposées au voisinage des première et deuxième zones de connexion (9-1, 9-2) ne sont pas en contact avec le substrat fonctionnel (1).

11. Dispositif de chromatographie selon la revendication 10, dans lequel le substrat de connexion (9) comprend des motifs d'isolation thermique (43) autour des première et deuxième zones de connexion (9-1, 9-2).

12. Dispositif de chromatographie selon l'une des revendications 1 à 11, dans lequel le moyen de maintien (19, 21) comprend une première et une seconde pièces adaptées à être disposées de part et d'autre de l'ensemble formé du substrat fonctionnel (1) et du substrat de connexion (9).

13. Dispositif de chromatographie selon la revendication 12, comprenant en outre au moins un conduit thermique (49) dans la pièce (21) du moyen de maintien disposée en regard d'une deuxième face (8) du substrat de connexion (9) opposée à ladite première face (7) du substrat de connexion, un fluide de refroidissement étant destiné à circuler dans le conduit thermique (49).

14. Procédé de fonctionnalisation d'un dispositif de chromatographie selon l'une des revendications 1 à 13, comprenant les étapes suivantes :
- disposer et maintenir ladite première face (5) du substrat fonctionnel (1) contre ladite première face (7) d'un premier substrat de connexion (9), de sorte que les premier (3-1) et deuxième (3-2) orifices soient disposés respectivement en regard des troisième (7-1) et quatrième (7-2) orifices ;
- introduire un liquide de fonctionnalisation par le premier capillaire (11), de sorte que le liquide de fonctionnalisation passe dans le premier circuit fluidique (15), le canal (3) et le deuxième circuit fluidique (17), et sorte par le deuxième capillaire (13) ;
- procéder à un séchage du canal (3), de façon à former une couche de fonctionnalisation recouvrant la paroi interne dudit canal (3) ; et
- remplacer le premier substrat de connexion (9) par un second substrat de connexion dont les premier et deuxième circuits fluidiques et les premier et deuxième capillaires n'ont pas été traversés par le liquide de fonctionnalisation.

## Patentansprüche

1. Chromatographievorrichtung, mindestens Folgendes umfassend:
- ein funktionelles Substrat (1), einen Kanal (3) umfassend, der sich zwischen einer ersten (3-1) und einer zweiten (3-2) Öffnung erstreckt, die in eine erste Seite (5) des funktionellen Substrats münden, wobei der Kanal (3) eine Innenwand umfasst, die mit einer Funktionalisierungsschicht überzogen ist
- wobei die erste Seite (5) des funktionellen Substrats gegen eine erste Seite (7) eines Verbindungssubstrats (9) angeordnet ist, eine dritte (7-1) und eine vierte (7-2) Öffnung umfassend, die in die erste Seite (7) des Verbindungssubstrats münden, solcherart, dass die erste (3-1) und die zweite (3-2) Öffnung jeweils gegenüber der dritten (7-1) und der vierten (7-2) Öffnung angeordnet sind,
- wobei das Verbindungssubstrat mit einer ersten (11) und einer zweiten (13) Kapillare verbunden ist, die jeweils in einer ersten (9-1) und einer zweiten (9-2) Verbindungszone verklebt sind, wobei die erste (9-1) und die zweite (9-2) Verbindungszone in eine Scheibe (12) des Verbindungssubstrats (9) münden, wobei das Verbindungssubstrat einen ersten Fluidkreis (15) aufweist, der sich zwischen der ersten Kapillare und der dritten Öffnung erstreckt, und einen zweiten Fluidkreis (17) aufweist, der sich zwischen der zweiten Kapillare und der vierten Öffnung erstreckt,
wobei das Verbindungssubstrat eine Haube oder Abdeckung (18) aufweist, die auf einem Teil (10) des Verbindungssubstrats (9) angebracht ist, in dem die Fluidkreise (15, 17) ausgebildet sind, um die Fluidverbindungsbereiche (9-1, 9-2) und die Fluidkreise (15, 17) dicht zu verschließen; und
- ein Haltemittel (19, 21, 51), das dazu geeignet ist, die erste Seite (5) des funktionellen Substrats vorübergehend anliegend an der ersten Seite (7) des Verbindungssubstrats zu halten, um den dichten Durchfluss eines Fluids zwischen der ersten und der zweiten Kapillare durch den ersten Fluidkreislauf, den Kanal des funktionellen Substrats und den zweiten Fluidkreislauf zu ermöglichen.

2. Chromatographievorrichtung nach Anspruch 1, wobei der Kanal (3) des funktionellen Substrats (1) eine Chromatographiesäule oder ein Vorkonzentrator ist.

3. Chromatographievorrichtung nach Anspruch 1 oder 2, wobei das Verbindungssubstrat (9) einen ersten und einen zweiten ringförmigen Graben (27) aufweist, jeweils die dritte (7-1) und die vierte (7-2) Öffnung umgebend, wobei der erste und der zweite Graben so konfiguriert sind, dass sie jeweils eine erste und eine zweite Dichtung (25) aufnehmen.

4. Chromatographievorrichtung nach Anspruch 3, wobei das funktionelle Substrat (1) einen dritten und einen vierten ringförmigen Graben umfasst, jeweils die erste (3-1)und die zweite (3-2) Öffnung umgebend, wobei der dritte und der vierte Graben so konfiguriert sind, dass sie jeweils die erste und die zweite Dichtung (25) aufnehmen.

5. Chromatographievorrichtung nach Anspruch 3 oder 4, wobei die Dichtungen (25) aus Silikon bestehen.

6. Chromatographievorrichtung nach einem der Ansprüche 3 bis 5, wobei die Dichtungen (25) O-Ringe sind.

7. Chromatographievorrichtung nach einem der Ansprüche 1 bis 6, wobei die charakteristische Größe des Kanals (3) und die des ersten (15) und des zweiten (17) fluidischen Kreislauf zwischen 50 und 500 µm liegt.

8. Chromatographievorrichtung nach einem der Ansprüche 1 bis 7, wobei der Innendurchmesser der ersten (11) und zweiten (13) Kapillare zwischen etwa 50 und 250 µm liegt und wobei der Außendurchmesser der ersten und zweiten Kapillare zwischen etwa 150 und 450 µm liegt.

9. Chromatographievorrichtung nach einem der Ansprüche 1 bis 8, weiter ein Heizsystem (31) umfassend, das an einer zweiten Seite (6) des funktionellen Substrats (1) angeordnet ist, die der ersten Seite (5) des funktionellen Substrats gegenüberliegt.

10. Chromatographievorrichtung nach einem der Ansprüche 1 bis 9, wobei die Fläche der ersten Seite (7) des Verbindungssubstrats (9) größer ist als die Fläche der ersten Seite (5) des funktionellen Substrats (1), und wobei wenigstens Abschnitte der ersten Seite (7) des Verbindungssubstrats (9), die in der Nähe des ersten und zweiten Verbindungsbereichs (9-1, 9-2) angeordnet sind, nicht in Kontakt mit dem funktionellen Substrat (1) stehen.

11. Chromatographievorrichtung nach Anspruch 10, wobei das Verbindungssubstrat (9) wärmeisolierende Muster (43) um den ersten und den zweiten Verbindungsbereich (9-1, 9-2) herum aufweist.

12. Chromatographievorrichtung nach einem der Ansprüche 1 bis 11, wobei das Haltemittel (19, 21) ein erstes und ein zweites Teil umfasst, die dazu geeignet sind, auf beiden Seiten der aus dem funktionellen Substrat (1) und dem Verbindungssubstrat (9) gebildeten Gesamtheit angeordnet zu werden.

13. Chromatographievorrichtung nach Anspruch 12, weiter mindestens eine Wärmeleitung (49) in dem Teil (21) des Haltemittels umfassend, das gegenüber einer zweiten Seite (8) des Verbindungssubstrats (9) angeordnet ist, die der ersten Seite (7) des Verbindungssubstrats gegenüberliegt, wobei ein Kühlfluid dazu bestimmt ist, in der Wärmeleitung (49) zu zirkulieren.

14. Verfahren zur Funktionalisierung einer Chromatographievorrichtung nach einem der Ansprüche 1 bis 13, die folgenden Schritte umfassend:
- Anordnen und Halten der ersten Seite (5) des funktionellen Substrats (1) gegen die erste Seite (7) eines ersten Verbindungssubstrats (9), solcherart, dass die erste (3-1) und die zweite (3-2) Öffnung jeweils gegenüber der dritten (7-1) und der vierten (7-2) Öffnung angeordnet sind;
- Einführen einer Funktionalisierungsflüssigkeit durch die erste Kapillare (11), solcherart, dass die Funktionalisierungsflüssigkeit durch den ersten Fluidkreislauf (15), den Kanal (3) und den zweiten Fluidkreislauf (17) fließt und durch die zweite Kapillare (13) austritt;
- Durchführen einer Trocknung des Kanals (3), solcherart, dass eine Funktionalisierungsschicht gebildet wird, die die Innenwand des Kanals (3) bedeckt; und
- Ersetzen des ersten Verbindungssubstrats (9) durch ein zweites Verbindungssubstrat, dessen erster und zweiter Fluidkreislauf und dessen erste und zweite Kapillare nicht von der Funktionalisierungsflüssigkeit durchdrungen worden sind.

## Claims

1. Chromatography device, comprising at least:
- a functional substrate (1), including a channel (3) extending between a first (3-1) and a second (3-2) orifice opening onto a first face (5) of the functional substrate, the channel (3) comprising an inner wall covered with a functionalisation layer,
- said first face (5) of the functional substrate being disposed against a first face (7) of a connection substrate (9), including a third (7-1) and a fourth (7-2) orifice opening onto said first face (7) of the connection substrate, so that the first (3-1) and second (3-2) orifice are disposed respectively facing the third (7-1) and fourth (7-2) orifice,
- the connection substrate being connected to a first (11) and a second (12) capillary respectively glued in a first (9-1) and a second (9-2) connection zone, the first (9-1) and second (9-2) connection zone opening onto an edge (12) of the connection substrate (9), the connection substrate including a first fluid circuit (15) extending between the first capillary and the third orifice and including a second fluid circuit (17) extending between the second capillary and the fourth orifice,
the connection substrate including a hood or cover (18) assembled onto a part (10) of the connection substrate (9) in which the fluid circuits (15, 17) are made to close in a sealed manner the fluid connection zones (9-1, 9-2) and the fluid circuits (15, 17); and
- a maintaining means (19, 21, 51) adapted to maintain in a temporary manner said first face (5) of the functional substrate bearing against said first face (7) of the connection substrate, so as to allow the sealed passage of a fluid between the first and second capillaries, through the first fluid circuit, the channel of the functional substrate and the second fluid circuit.

2. Chromatography device according to claim 1, wherein the channel (3) of the functional substrate (1) is a chromatography column or a preconcentrator.

3. Chromatography device according to claim 1 or 2, wherein the connection substrate (9) comprises a first and a second annular trench (27) respectively surrounding the third (7-1) and fourth (7-2) orifice, the first and second trench being configured to respectively receive a first and a second sealing joint (25).

4. Chromatography device according to claim 3, wherein the functional substrate (1) comprises a third and a fourth annular trench respectively surrounding the first (3-1) and second (3-2) orifice, the third and fourth trenches being configured to respectively receive the first and the second sealing joint (25).

5. Chromatography device according to claim 3 or 4, wherein the sealing joints (25) are made of silicone.

6. Chromatography device according to one of claims 3 to 5, wherein the sealing joints (25) are O-rings.

7. Chromatography device according to one of claims 1 to 6, wherein the characteristic dimension of the channel (3) and that of the first (15) and second (17) fluid circuit are between approximately 50 and 500µm.

8. Chromatography device according to one of claims 1 to 7, wherein the inner diameter of the first (11) and second (13) capillary is between approximately 50 and 250µm and wherein the outer diameter of the first and second capillary is between approximately 150 and 450µm.

9. Chromatography device according to one of claims 1 to 8, further comprising a heating system (31) disposed against a second face (6) of the functional substrate (1) opposite to said first face (5) of the functional substrate.

10. Chromatography device according to one of claims 1 to 9, wherein the surface area of said first face (7) of the connection substrate (9) is greater that the surface area of said first face (5) of the functional substrate (1), and wherein at least portions of said first face (7) of the connection substrate (9) disposed near the first and second connection zone (9-1, 9-2) are not in contact with the functional substrate (1).

11. Chromatography device according to claim 10, wherein the connection substrate (9) comprises thermal insulation patterns (43) around the first and second connection zone (9-1, 9-2).

12. Chromatography device according to one of claims 1 to 11, wherein the maintaining means (19, 21) comprises a first and a second part adapted to be disposed on either side of the assembly formed by the functional substrate (1) and the connection substrate (9).

13. Chromatography device according to claim 12, further comprising at least one thermal duct (49) in the part (21) of the maintaining means disposed facing a second face (8) of the connection substrate (9) opposite to said first face (7) of the connection substrate, a cooling fluid being intended to circulate in the thermal duct (49).

14. Method for functionalising a chromatography device according to one of claims 1 to 13, comprising the following steps:
- disposing and maintaining said first face (5) of the functional substrate (1) against said first face (7) of a first connection substrate (9), so that the first (3-1) and second (3-2) orifice are disposed respectively facing the third (7-1) and fourth (7-2) orifice;
- introducing a functionalisation liquid by the first capillary (11), so that the functionalisation liquid passes in the first fluid circuit (15), the channel (3) and the second fluid circuit (17), and exits by the second capillary (13);
- carrying out a drying of the channel (3), so as to form a functionalisation layer covering the inner wall of said channel (3); and
- replacing the first connection substrate (9) with a second connection substrate, through the first and second fluid circuit and the first and second capillary of which the functionalisation liquid has not passed.
